# EUROPEAN PATENT SPECIFICATION

(11) **EP 1 591 050 B1**
(45) Date of publication and mention of the grant of the patent: **18.07.2007**
(21) Application number: 04425289.8
(22) Date of filing: 27.04.2004
(51) Int. Cl.: A47J 31/30

(54) **Electric coffee machine**
Elektrische Kaffeemaschine
Cafetière électrique

(43) Date of publication of application: 02.11.2005
(73) Proprietor: IMETEC S.p.A., 24052 Azzano S.Paolo (Bergamo) (IT)
(72) Inventor: Morgandi, Arturo, 24129 Bergamo (IT)
(74) Representative: Giannesi, Simona

(56) References cited:
- EP-A- 0 116 286
- DE-A- 3 843 140
- DE-U- 20 119 168
- DE-U- 20 217 495

## Description

The present invention concerns an electric coffee machine.

More specifically, the present invention concerns an electric machine for producing espresso coffee.

Non-electric coffee-makers for producing espresso coffee are well known in the art and typically comprise a lower vessel for containing the water to be heated, a filter, typically funnel-shaped, for containing the ground coffee and an upper vessel for containing the coffee produced by the passage of hot water from the lower vessel to the upper vessel through the filter.

Electric machines for producing espresso coffee are also known in the art. Such electric machines comprise, as well as all of the aforementioned elements of a non-electric coffee-maker, an electric heating element for heating up the water contained in the lower vessel, an electric connector for connecting the heating element to an external electrical power source and an electronic control system for adjusting the temperature of the heating element.

Throughout the present description the expression "coffee-maker" is used to indicate a non-electric device for producing coffee comprising a lower vessel, a filter and an upper vessel. In its turn, the expression "coffee machine" is used to indicate an electric device for producing coffee comprising a coffee-maker and at least one electric heating element for heating up the water contained in the lower vessel of the coffee-maker.

US 3 757 670 discloses an electric espresso coffee machine in which the heating element is integrally moulded with the bottom of the lower vessel. The disclosed electric coffee machine also comprises a male electric connector and an electronic control system contained in a plastic housing.

The housing is fixed onto the bottom of the lower vessel of the coffee-maker and has an opening for the insertion of a female connector that takes electrical energy to the heating element, through connection with the male connector.

The Applicant observes that all of the electronic components of this coffee machine are irremovably fixed to the lower vessel. Moreover, the housing is accessible from the outside through the aforementioned opening. This constitutes a problem when rinsing or washing the coffee machine since the electronic components fixed to the lower vessel can be exposed to the action of water.

Also known in the art is an electric coffee machine in which the heating element is housed in a plastic casing irremovably fixed to the bottom of the lower vessel. Such a coffee machine also comprises a male electric connector associated with the heating element, which is encased in the plastic casing and projects from the bottom of the lower vessel; and a base, structurally distinct from the lower vessel. Such a base comprises a female electric connector, an electronic control system for adjusting the temperature of the heating element and a power supply cable. In use, the water contained in the lower vessel is heated by the heating element when the lower vessel is rested on the base to create an electrical connection between the male connector of the lower vessel and the female connector of the base.

The Applicant observes that the heating element and the relative male connector of this coffee machine are irremovably fixed to the lower vessel. Moreover, such a connector is accessible from the outside.

Therefore, this electric coffee machine has the disadvantage of exposing the electric connector associated with the heating element to the action of water, when the lower vessel is rinsed or washed. Moreover, in the case of infiltration of water, also the heating element can be exposed to the action of water.

The technical problem underlying the present invention is, therefore, that of providing an electric coffee machine that is more reliable.

The present invention concerns, in a first aspect thereof, an electric espresso coffee machine comprising
- a lower vessel suitable for containing water,
- an upper vessel,
- a filter between the lower vessel and the upper vessel,
- a heating element for heating the water contained in the lower vessel,
- a base structurally distinct from the lower vessel, said lower vessel being adapted in use to be placed on said base, wherein the heating element is housed inside the base.

In the coffee machine of the invention the heating element is housed inside the base, which is structurally separate from the lower vessel. The lower vessel, being without electric parts, can thus be immersed in water without the risk of exposing electric parts of the coffee machine to the action of water making the coffee machine of the invention more reliable than conventional machines and washable.

DE 20119168 U1 discloses such a device, from which the invention differs in the following aspects.

The base has on the upper part a coupling zone for receiving the bottom of the lower vessel.

In order to improve the transmission of heat between the heating element housed in the base and the water contained in the lower vessel, the bottom of the lower vessel is adapted to couple through a shape coupling with the coupling zone. The bottom of the lower vessel and the coupling zone have a complementary shape. The bottom of the lower vessel has a perimetric groove. Moreover, the coupling zone has a perimetric projection adapted to engage the bottom of the lower vessel at the groove.

Advantageously, in order to optimise the transmission of heat between the heating element housed in the base and the water contained in the lower vessel, the coupling zone is concave. Preferably, the bottom of the lower vessel is convex.

Advantageously, in order to improve the transmission of heat between the heating element and the water contained in the lower vessel, the heating element is housed in the base at the coupling zone. Typically, the heating element is housed along the perimeter of the coupling zone. Typically, the heating element is C-shaped.

Typically, the coupling zone is circle-shaped.

The coupling zone is typically in a central position of the base.

Typically, the coffee machine also comprises a power supply cable housed inside the base to feed the heating element.

Advantageously, the coffee machine also comprises a temperature sensor associated with the heating element to detect the temperature thereof. Preferably, said temperature sensor is housed inside the base.

The coffee machine of the invention, in which both the heating element and the temperature sensor are housed in the base, allows the heating element to be placed in direct contact with the temperature sensor improving the sensitivity of the latter and the reliability of the coffee machine.

Advantageously, the coffee machine also comprises control means for adjusting the electric power supplied to the heating element. Preferably, said control means are housed inside the base.

Advantageously, said control means are operatively associated with said temperature sensor and with said heating element so as to adjust the electric power supplied to the heating element according to the temperature detected by the temperature sensor. Typically, said control means are suitable for switching the heating element on and off according to the temperature detected by the temperature sensor.

Advantageously, the coffee machine also comprises a timer. Preferably, said timer is housed inside the base. The control means are also advantageously suitable for cooperating with the timer so as to switch the heating element off after a predetermined time period has passed since it was switched on. This is a guarantee of safety since it allows the coffee machine to be switched off automatically in the case in which the user leaves it on. Moreover, it allows the coffee produced to be kept hot for the predetermined time period.

Advantageously, the coffee machine also comprises a micro-switch. Preferably, said micro-switch is located on the base, near to the coupling zone. Advantageously, said micro-switch has a position such that, when during use the lower vessel is placed on the coupling zone, the lower edge of the outer side surface thereof presses upon the micro-switch.

The control means are advantageously operatively connected to the micro-switch. In particular, the control means are advantageously suitable for switching the heating element off when the lower edge of the outer side surface of the lower vessel no longer presses upon the micro-switch.

Further characteristics and advantages of the present invention shall become clearer from the following detailed description of a preferred embodiment thereof, made with reference to the attached drawings. In such drawings,
- figure 1 is a perspective view of a coffee-maker of an electric coffee machine according to the invention;
- figure 2 is a perspective view of a base of an electric coffee machine according to the invention;
- figure 3 is a perspective bottom view of a lower vessel of the coffee-maker of figure 1;
- figure 4 is a perspective top view of the lower vessel of figure 3 with a filter inserted therein;
- figure 5 is a perspective view of an electric coffee machine according to the invention.

In such figures an electric coffee machine 20 according to the invention is shown comprising a coffee-maker 10 and a base 3. The coffee-maker 10 comprises a lower vessel 1, an upper vessel 2 and a filter 6.

The lower vessel 1, the upper vessel 2 and the filter 6 are elements typically contained in a conventional non-electric coffee-maker for producing espresso coffee and carry out the same functions conventionally carried out in such coffee-makers. The coffee is therefore produced with substantially the same principle as that of such coffee-makers.

In particular, the lower vessel 1 is adapted to contain the water to be heated. The filter 6 is typically funnel-shaped (not shown) with a perforated bottom to allow hot water to pass from the lower vessel to the upper vessel and is adapted to contain coffee powder. The upper vessel 2 is suitable for containing the coffee produced by the aforementioned passage of hot water.

The lower vessel 1 has a bottom 12 and an outer side surface with a lower edge 11. The outer side surface is typically polygonal, for example with nine faces.

The lower edge 11 of the outer side surface of the lower vessel 1 is advantageously rubber-coated (not shown) to allow the coffee-maker 10 to be rested upon a table or other support, even when the lower vessel 1 is hot.

The base 3 according to the invention is structurally distinct from the coffee-maker 10 and, in particular, from the lower vessel 1.

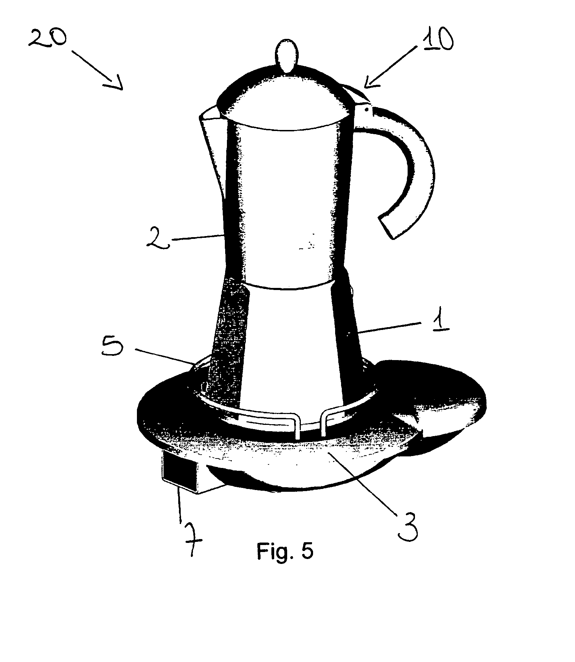

The base 3 according to the invention comprises a coupling zone 4 on which, in use, the lower vessel 1 is placed, as shown in figure 5.

The bottom 12 of the lower vessel 1 and the coupling zone 4 according to the invention are shaped in such a way as to allow a shape coupling between them.

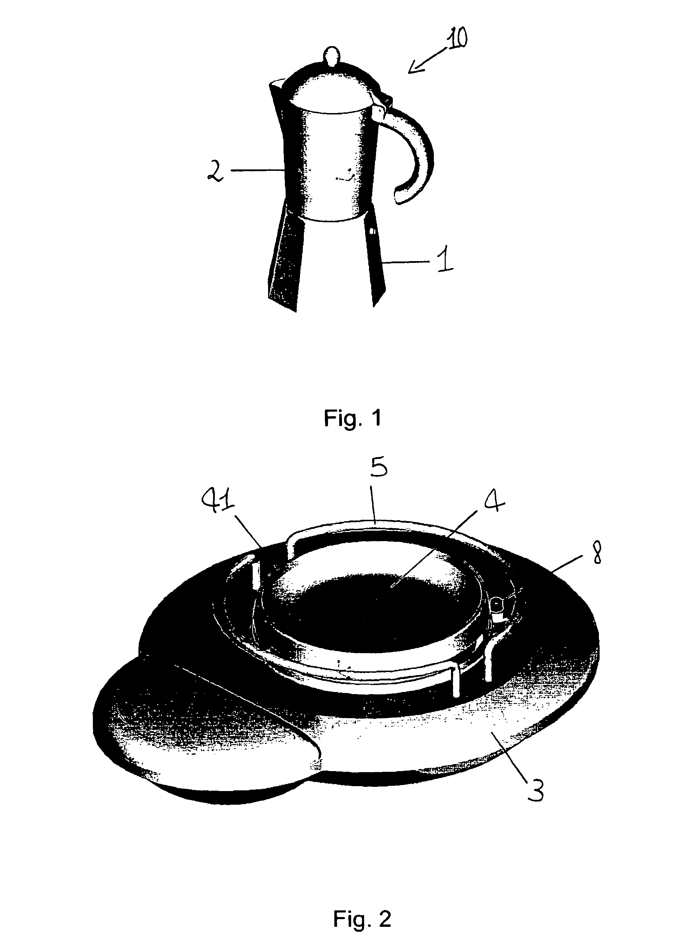

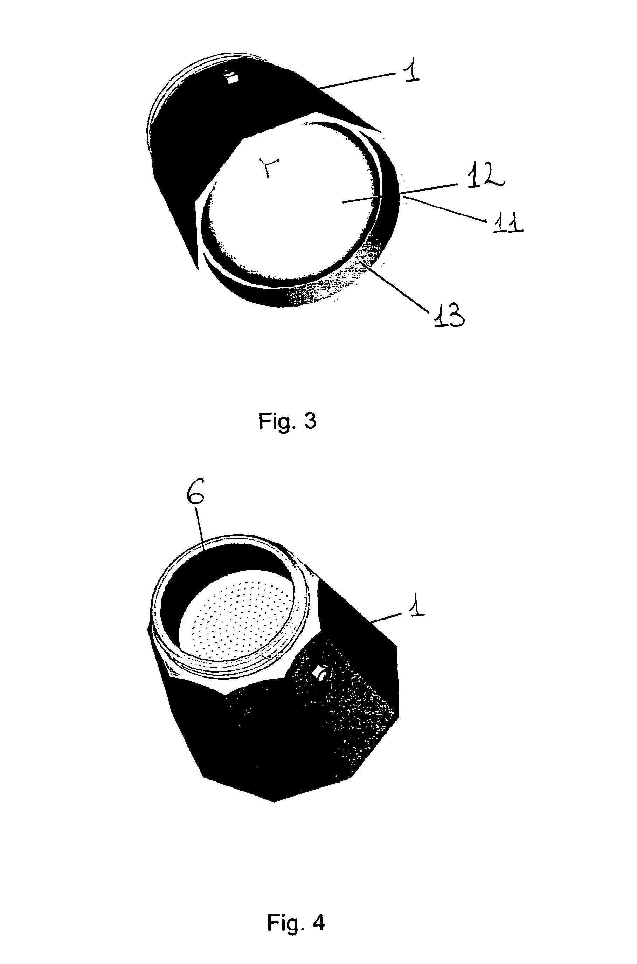

In the illustrated embodiment, the bottom 12 has a substantially annular groove 13 and the coupling zone 4 has a substantially annular projection 41 adapted to engage the bottom 12 at the groove 13. More in particular, the bottom 12 has a built-in convex zone that forms the groove 13 whereas the coupling zone 4 has a concave shape, matching that of the bottom 12, which generates the projection 41, as shown in figures 3 and 2.

Typically, the built-in zone of the bottom 12 is flush with the lower edge 11 of the outer side surface of the lower vessel 1. However, such a built-in zone can also be recessed with respect to the lower edge 11.

When the coffee-maker 10 is placed on the base 3, the side surface of the lower vessel 1 hides the coupling zone 4, as shown in figure 5.

Advantageously, the annular projection 41 of the coupling zone 4 has a plurality of notches (not shown) to ease the removal of the lower vessel 1, when the coffee-maker 10 is lifted.

The base 3 is typically made from aluminium that is preferably coated, at least at the coupling zone 4, with a known non-stick varnish, like for example Teflon™. Such non-stick varnish advantageously improve the transmission of heat.

As shown in figures 2 and 5, the base 3 advantageously also comprises a protective element 5 - comprising two opposite semi-annular portions, for example made from chromium-plated steel - that constitutes a barrier for a user who, inadvertently, sets about touching the coupling zone 4 when it is hot.

The base 3 also comprises an opening 7 with a terminal board (not shown) for the entry of an external power supply cable.

Moreover, the base 3 comprises, inside of it, an electric heating element, a temperature sensor, a power supply cable and control means (not shown).

The power supply cable is suitable for connecting the heating element to the external electric power supply cable, through the terminal board contained inside the opening 7.

The electric heating element is typically a conventional electrical resistance that is die-cast or pressure inserted, according to known techniques, in the coupling zone 4. Typically, the electrical resistance is C-shaped.

The electrical sensor is of the conventional type, typically a thermostat or an NTC type probe.

The electrical sensor is advantageously in contact with the electrical resistance so as to detect the temperature thereof.

The control means are operatively connected to the electrical sensor and to the heating element. They comprise an electric circuit suitable for adjusting the electrical power supplied to the heating element according to the temperature detected by the temperature sensor.

For example, when the coffee machine is switched on, the heating element is switched on and the control means control the temperature detected by the temperature sensor. When the detected temperature exceeds a first predetermined threshold temperature (for example 200°C), the control means reduce the electrical power supplied to the heating element (i.e. switch it on/off) so as to make the temperature detected decrease by a predetermined amount for a predetermined time period (for example about 2-3 minutes). This allows, at the switching on of the coffee machine, when the heating element (and the water contained in the lower vessel) is still cold, the water heating speed to be optimised and, at the moment when the water starts to boil, the temperature to be decreased so as to obtain a relatively slow passage of the water through the filter containing the coffee powder, thereby improving the quality of the coffee. In other words, the same effect is obtained that would be obtained by reducing the flame of a gas burner.

Moreover, once the aforementioned predetermined time period has passed, the control means switch the heating element on/off so as to keep the temperature detected at a constant level, equal to that of a second predetermined threshold temperature. This allows the coffee produced in the upper vessel to be kept hot until the coffee machine is switched off.

The first threshold temperature is suitably selected so as to allow the water contained in the lower vessel 1 to boil and pass into the upper vessel 2 whereas the second threshold temperature is suitably selected so as to keep the coffee produced, contained in the upper vessel 2, at the desired temperature (for example at about 70-80°C).

Advantageously, the base 3 also comprises, inside of it, a timer (not shown). The control means are advantageously also suitable for cooperating with the timer so as to switch the heating element off after a predetermined time period has passed (for example 30 minutes) since it was switched on. This allows the coffee machine to be switched off automatically, in the case in which the user forgets it on. Moreover, it allows the coffee produced to be kept at the desired temperature for such a predetermined time period.

Advantageously, the coffee machine also comprises a micro-switch 8 located on the base (on the outer upper surface), near to the coupling zone 4. Advantageously, the micro-switch 8 is in a position such that, when in use the lower vessel 1 is rested upon the coupling zone 4, the lower edge 11 of the outer side surface of the lower vessel 1 presses upon it.

The control means are advantageously operatively connected to the micro-switch 8 so as to switch the heating element off when the lower edge 11 no longer presses upon it. In this way, when a user picks up the coffee-maker 10 from the base 3 the coffee machine switches automatically off, irrespective of the elapsed time detected by the timer.

Moreover, the control means are also such as to prevent the heating element switching back on automatically when the user, after having picked up the coffee-maker 10, place it back on the base 3 and the lower edge 11 once again presses upon the micro-switch 8. To switch it back on it is necessary to press a re-set button that switches the heating element back on through the control means.

## Claims

1. An electric espresso coffee machine (20) comprising
- a lower vessel (1) adpated to contain water,
- an upper vessel (2),
- a filter (6) between the lower vessel and the upper vessel (1),
- a heating element for heating the water contained in the lower vessel (1),
- a base (3) structurally distinct from the lower vessel (1), said lower vessel (1) being adapted in use to be placed on said base (3),
wherein the heating element is housed inside the base (3) and the base (3) has on the upper part a coupling zone (4) to receive the bottom (12) of the lower vessel (1), **characterized in that** the bottom (12) of the lower vessel (1) has a perimetric groove (13) and the coupling zone (4) has a perimetric projection (41) adapted to engage the bottom (12) of the lower vessel (1) at the perimetric groove (13).

2. Coffee machine (20) according to claim 2, wherein the bottom (12) of the lower vessel (1) is adapted to couple through a shape coupling with the coupling zone (4).

3. Coffee machine (20) according to claim 1 or 2, wherein the bottom (12) of the lower vessel (1) and the coupling zone (4) have complementary shapes.

4. Coffee machine (20) according to any one of claims 1 to 3, wherein the coupling zone (4) is concave.

5. Coffee machine (20) according to claim 4, wherein the bottom (12) of the lower vessel (1) is convex.

6. Coffee machine (20) according to any one of claims 1 to 5, wherein the heating element is housed inside the base (3) at the coupling zone (4).

7. Coffee machine (20) according to any one of claims 1 to 6, also comprising a temperature sensor associated with the heating element to detect the temperature thereof.

8. Coffee machine (20) according to claim 7, wherein said temperature sensor is housed inside the base (3).

9. Coffee machine (20) according to any one of claims 1 to 8, also comprising control means for adjusting the power supplied to the heating element.

10. Coffee machine (20) according to claim 9, wherein said control means are housed inside the base (3).

11. Coffee machine (20) according to claim 7 and 9, wherein said control means are operatively associated with said temperature sensor and with said heating element so as to switch the heating element on and off according to the temperature detected by the temperature sensor.

12. Coffee machine (20) according to any one of claims 1 to 11, also comprising a timer.

13. Coffee machine (20) according to claim 12, wherein said timer is housed inside the base (3).

14. Coffee machine (20) according to claim 9 and 12, wherein the control means are adapted to cooperate with the timer so as to switch the heating element off after a predetermined time period has passed since it was switched on.

15. Coffee machine (20) according to any one of claims 1 to 14, also comprising a micro-switch (8).

16. Coffee machine (20) according to claim 15, wherein said micro-switch (8) is located on the base (3), near the coupling zone (4).

17. Coffee machine (20) according to claim 16, wherein said micro-switch (8) is positioned on the base (3) in such a way that, when in use the lower vessel (1) is placed on the coupling zone (4), the lower edge (11) of the outer side surface of the lower vessel (1) presses upon the micro-switch (8).

18. Coffee machine (20) according to claim 9 and 15, wherein the control means are operatively connected to the micro-switch (8).

19. Coffee machine (20) according to claim 17 and 18, wherein the control means are adapted to switch the heating element off when, in use, the lower vessel (1) is lifted from the coupling zone (4) and the lower edge (11) no longer presses upon the micro-switch (8).

20. Coffee machine (20) according to any one of claims 1 to 19, wherein the base (3) is coated, at least at the coupling zone 4, with Teflon^{™}.

## Patentansprüche

1. Elektrische Espresso-Kaffeemaschine (20) mit:
- einem unteren Behälter (1), der geeignet ist, um Wasser zu enthalten,
- einem oberen Behälter (2),
- einem Filter (6) zwischen dem unteren Behälter (1) und dem oberen Behälter (2),
- einem Heizelement zum Heizen des in dem unteren Behälter (1) enthaltenen Wassers,
- einer zu dem unteren Behälter (1) strukturell separaten Basis (3), wobei in Gebrauch der untere Behälter (1) auf der Basis (3) angeordnet werden kann,
wobei das Heizelement innerhalb der Basis (3) untergebracht ist und die Basis (3) an dem oberen Teil eine Verbindungszone (4) zur Aufnahme des Bodens (12) des unteren Behälters (1) hat, **dadurch gekennzeichnet, daß** der Boden (12) des unteren Behälters (1) eine Umfangsnut (13) aufweist und die Verbindungszone (4) einen Umfangsvorsprung (41) aufweist, der an der Umfangsnut (13) in den Boden (12) des unteren Behälters (1) greifen kann.

2. Kaffeemaschine (20) nach Anspruch 2, wobei der Boden (12) des unteren Behälters (1) über eine Formverbindung mit der Verbindungszone (4) verbunden werden kann.

3. Kaffeemaschine (20) nach Anspruch 1 oder 2, wobei der Boden (12) des unteren Behälters (1) und die Verbindungszone (4) komplementäre Formen haben.

4. Kaffeemaschine (20) nach einem der Ansprüche 1 bis 3, wobei die Verbindungszone (4) konkav ist.

5. Kaffeemaschine (20) nach Anspruch 4, wobei der Boden (12) des unteren Behälters (1) konvex ist.

6. Kaffeemaschine (20) nach einem der Ansprüche 1 bis 5, wobei das Heizelement innerhalb der Basis (3) an der Verbindungszone (4) untergebracht ist.

7. Kaffeemaschine (20) nach einem der Ansprüche 1 bis 6, ferner mit einem Temperatursensor, der mit dem Heizelement in Verbindung steht, um dessen Temperatur zu detektieren.

8. Kaffeemaschine (20) nach Anspruch 7, wobei der Temperatursensor innerhalb der Basis (3) untergebracht ist.

9. Kaffeemaschine (20) nach einem der Ansprüche 1 bis 8, ferner mit Steuereinrichtungen zum Einstellen der dem Heizelement zugeführten Leistung.

10. Kaffeemaschine (20) nach Anspruch 9, wobei die Steuereinrichtungen innerhalb der Basis (3) untergebracht sind.

11. Kaffeemaschine (20) nach Anspruch 7 und 9, wobei die Steuereinrichtungen in funktioneller Verbindung mit dem Temperatursensor und mit dem Heizelement stehen, um das Heizelement gemäß der von dem Temperatursensor detektierten Temperatur ein- und auszuschalten.

12. Kaffeemaschine (20) nach einem der Ansprüche 1 bis 11, ferner mit einem Zeitschalter.

13. Kaffeemaschine (20) nach Anspruch 12, wobei der Zeitschalter innerhalb der Basis (3) untergebracht ist.

14. Kaffeemaschine (20) nach Anspruch 9 und 12, wobei die Steuereinrichtungen mit dem Zeitschalter zusammenzuwirken können, um das Heizelement auszuschalten, nachdem eine vorgegebene Zeitdauer abgelaufen ist, seit es eingeschaltet wurde.

15. Kaffeemaschine (20) nach einem der Ansprüche 1 bis 14, ferner mit einem Mikroschalter (8).

16. Kaffeemaschine (20) nach Anspruch 15, wobei der Mikroschalter (8.) an der Basis (3) in der Nähe der Verbindungszone (4) angeordnet ist.

17. Kaffeemaschine (20) nach Anspruch 16, wobei der Mikroschalter (8) auf eine solche Weise an der Basis (3) angeordnet ist, daß, wenn in Gebrauch der untere Behälter (1) auf die Verbindungszone (4) gestellt wird, die untere Kante (11) der äußeren Oberfläche des unteren Behälters (1) auf den Mikroschalter (8) drückt.

18. Kaffeemaschine (20) nach Anspruch 9 und 15, wobei die Steuereinrichtungen in funktioneller Verbindung mit dem Mikroschalter (8) stehen.

19. Kaffeemaschine (20) nach Anspruch 17 und 18, wobei die Steuereinrichtungen das Heizelement ausschalten können, wenn in Gebrauch der untere Behälter (1) von der Verbindungszone (4) hochgehoben wird und die untere Kante (11) nicht länger auf den Mikroschalter (8) drückt.

20. Kaffeemaschine (20) nach einem der Ansprüche 1 bis 19, wobei die Basis (3) zumindest an der Verbindungszone (4) mit Teflon^{™} beschichtet ist.

## Revendications

1. Machine à café électrique de type espresso (20) comprenant:
- une cuvette basse (1) adaptée pour contenir de l'eau,
- une cuvette supérieure (2),
- un filtre (6) entre la cuvette basse et la cuvette supérieure (1),
- un élément chauffant pour chauffer l'eau contenue dans la cuvette basse (1),
- une base (3) structurellement distincte de la cuvette basse (1), cette cuvette basse (1) étant adaptée en fonctionnement à être placée sur cette base (3),
dans laquelle l'élément chauffant est disposé à l'intérieur de la base (3) et la base (3) a sur la partie supérieure une zone d'accouplement (4) pour recevoir le fond (12) de la cuvette basse (1), **caractérisée en ce que** le fond (12) de la cuvette basse (1) possède une gorge périmétrique (13) et la zone d'accouplement (4) possède un épaulement périmétrique (41) adapté pour s'engager dans le fond (12) de la cuvette basse (1) au niveau de la gorge périmétrique (13).

2. Machine à café (20) selon la revendication 2, dans laquelle le fond (12) de la cuvette basse (1) est adapté pour s'accoupler avec la zone d'accouplement (4) via une forme d'accouplement.

3. Machine à café (20) selon la revendication 1 ou 2, dans laquelle le fond (12) de la cuvette basse (1) et la zone d'accouplement (4) ont des formes complémentaires.

4. Machine à café (20) selon l'une quelconque des revendications 1 à 3, dans laquelle la zone d'accouplement (4) est concave.

5. Machine à café (20) selon la revendication 4, dans laquelle le fond (12) de la cuvette basse (1) est convexe.

6. Machine à café (20) selon l'une quelconque des revendications 1 à 5, dans laquelle l'élément chauffant est disposé à l'intérieur de la base (3) au niveau de la zone d'accouplement (4).

7. Machine à café (20) selon l'une quelconque des revendications 1 à 6, comprenant en outre un capteur de température associé à l'élément chauffant de façon à détecter la température de celui-ci.

8. Machine à café (20) selon la revendication 7, dans laquelle ce capteur de température est disposé à l'intérieur de la base (3).

9. Machine à café (20) selon l'une quelconque des revendications 1 à 8, comprenant en outre des moyens de commande pour ajuster la puissance appliquée à l'élément chauffant.

10. Machine à café (20) selon la revendication 9, dans laquelle ces moyens de commande sont disposés à l'intérieur de la base (3).

11. Machine à café (20) selon les revendications 7 et 9, dans laquelle ces moyens de commande sont activement associés à ce capteur de température et à cet élément chauffant de façon à allumer et éteindre l'élément chauffant selon la température détectée par le capteur de température.

12. Machine à café (20) selon l'une quelconque des revendications 1 à 11, comprenant en outre une minuterie.

13. Machine à café (20) selon la revendication 12, dans laquelle cette minuterie est disposée à l'intérieur de la base (3).

14. Machine à café (20) selon les revendications 9 et 12, dans laquelle les moyens de commande sont adaptés pour coopérer avec la minuterie de façon à éteindre l'élément chauffant après qu'une période de temps prédéterminée est passée depuis son allumage.

15. Machine à café (20) selon l'une quelconque des revendications 1 à 14, comprenant en outre un microcontact de type « micro-switch » (8).

16. Machine à café (20) selon la revendication 15, dans laquelle ce microcontact (8) est situé dans la base (3), proche de la zone d'accouplement (4).

17. Machine à café (20) selon la revendication 16, dans laquelle ce microcontact (8) est positionné sur la base (3) de telle sorte que, en fonctionnement la cuvette basse (1) étant placée sur la zone d'accouplement (4), le rebord inférieur (11) de la surface externe de la cuvette basse (1) appuie sur le microcontact (8).

18. Machine à café (20) selon les revendications 9 et 15, dans laquelle les moyens de commande sont activement connectés au microcontact (8).

19. Machine à café (20) selon les revendications 17 et 18, dans laquelle les moyens de commande sont adaptés pour éteindre l'élément chauffant lorsque, en fonctionnement, la cuvette basse (1) est soulevée de la zone d'accouplement (4) et le rebord inférieur (11) n'appuie plus sur le microcontact (8).

20. Machine à café (20) selon l'une quelconque des revendications 1 à 19, dans laquelle la base (3) est recouverte, au moins sur la zone d'accouplement, de Teflon^{™}.
